Europäisches Patentamt

European Patent Office

Office européen des brevets

(19)

(11) **EP 1 055 103 B1**

(12) **FASCICULE DE BREVET EUROPEEN**

(45) Date de publication et mention
de la délivrance du brevet:
**17.07.2002 Bulletin 2002/29**

(21) Numéro de dépôt: **99903735.1**

(22) Date de dépôt: **11.02.1999**

(51) Int Cl.$^7$: **G01J 1/42**

(86) Numéro de dépôt international:
**PCT/FR99/00307**

(87) Numéro de publication internationale:
**WO 99/41576 (19.08.1999 Gazette 1999/33)**

(54) **PROCEDE ET DISPOSITIF DE DETERMINATION DE LA REPARTITION D'INTENSITE ET DE PHASE DANS DIFFERENTS PLANS DE COUPE D'UN FAISCEAU LASER**

VERFAHREN UND VORRICHTUNG ZUR BESTIMMUNG DER INTENSITÄTS- UND PHASENVERTEILUNG IN VERSCHIEDENEN SCHNITTEBENEN EINES LASERSTRAHLES

METHOD AND DEVICE FOR DETERMINING THE DISTRIBUTION OF INTENSITY AND PHASE IN A LASER BEAM DIFFERENT CUTTING PLANES

(84) Etats contractants désignés:
**DE GB**

(30) Priorité: **12.02.1998 FR 9801693**

(43) Date de publication de la demande:
**29.11.2000 Bulletin 2000/48**

(73) Titulaires:
- **COMMISSARIAT A L'ENERGIE ATOMIQUE**
  **75015 Paris (FR)**
- **COMPAGNIE GENERALE DES MATIERES**
  **NUCLEAIRES (COGEMA)**
  **78141 Velizy-Villacoublay (FR)**

(72) Inventeurs:
- **BELLEDENT, Jérôme**
  **F-91540 Ormoy (FR)**

- **BRUEL, Laurent**
  **F-26130 Saint Paul Trois Châteaux (FR)**

(74) Mandataire: **Des Termes, Monique et al**
  **Société Brevatome**
  **3, rue du Docteur Lancereaux**
  **75008 Paris (FR)**

(56) Documents cités:
  **US-A- 5 329 350**

- **FIENUP J. R.: "Phase retrieval algorithms: a comparison" APPLIED OPTICS., vol. 21, no. 15, 1 août 1982, pages 2758-2769, XP002083888 NEW YORK US cité dans la demande**

## Description

### Domaine technique et art antérieur

L'invention concerne un procédé et un dispositif pour la détermination de la répartition d'intensité et de phase dans différents plans de coupe d'un faisceau spatialement cohérent, notamment du faisceau lumineux issu d'un laser.

Les dispositifs connus, pour réaliser une telle détermination, se répartissent en trois catégories :

1) les dispositifs interférométriques,
2) les dispositifs de type Hartmann-Shack,
3) les dispositifs de prélèvement de profils spatiaux.

Les dispositifs et méthodes interférométriques utilisent la combinaison du front d'onde à mesurer avec une onde ayant une relation de phase avec celle-ci.

Les dispositifs et méthodes de type Hartmann-Shack utilisent un masque de phase (matrices de lentilles, trous...) pour évaluer la pente de la surface d'onde en chaque point. La reconstruction permet alors de calculer la surface d'onde.

Le problème de l'obtention de la phase à partir de simples profils d'intensités a déjà été étudié dans la littérature sous le nom anglais de "phase retrieval problem". L'étude de différentes solutions existantes est proposée dans les article "Phase retrieval algorithms : a comparison", Applied Optics, vol. 21, p. 2758, Août 1982 et "The phase retrieval problem", IEEE transactions on Antennas and Propagation AP29, p.386, Mars 1981.

On connait en particulier l'algorithme proposé par Gerchberg et Saxton en 1971 (revue Optik 34, 275 (1971)). Ces auteurs utilisent un plan image, et un plan de diffraction en champ lointain, au foyer d'une lentille.

Selon cet algorithme, on mesure un profil d'intensité dans un premier plan de coupe, en attribuant un profil de phase arbitraire en tout point de ce plan ; puis, on calcule, à l'aide des équations de propagation du faisceau, le profil d'intensité et de phase dans un second plan de coupe : on remplace le profil d'intensité calculé dans ce second plan par le profil mesuré, et on calcule à nouveau les profils d'intensité et de phase dans le premier plan. On itère jusqu'à convergence.

D'après l'article de D.L. Misell ("A method for the solution of the phase problem in electron microscopy") paru dans J. Phys. D. Appl. Phys., vol. 6, 1973, p. L6-L9 et le commentaire sur cet article de Gerchberg et Saxton (mêmes références, p. L31) les deux plans peuvent être quelconques mais proches l'un de l'autre.

Dans la littérature récente, de nombreuses études ont été faites sur ces méthodes, appliquées à la microscopie électronique et à l'émission des antennes. Ces études proposent des améliorations algorithmiques. On peut citer par exemple l'article "Radiation Pattern Evaluation from near-field Intensities on planes", IEEE Transactions on Antennas and Propagation, vol. 44, n° 5, Mai 1996, qui propose de ne pas utiliser nécessairement le plan objet et le plan de Fourier.

Des essais effectués avec des images de faisceaux laser et ces méthodes n'ont pas permis d'aboutir à des résultats suffisamment bons pour que l'on soit en mesure de se passer de systèmes de type Hartmann-Shack.

Il se pose donc le problème de trouver un procédé et un dispositif permettant d'améliorer la précision de la reconstruction de phase, et de concurrencer des systèmes commerciaux coûteux, par exemple de type Hartmann-Shack ou Zygo.

### Exposé de l'invention

L'invention a tout d'abord pour objet un procédé itératif de détermination de la répartition d'intensité et de phase d'un faisceau lumineux cohérent dans un plan, comportant :

- la mesure de l'intensité $I_i$, i=1... N, du faisceau, dans N plans, N≥3, dont le plan dans lequel on veut déterminer la répartition d'intensité et de phase,
- le choix, pour le plan i=1, d'une matrice de phase $\varphi_1$ de départ, et le calcul d'une matrice d'amplitude complexe par produit terme à terme de la matrice de phase $e^{i\varphi_1}$ avec la matrice d'amplitude $A_1$ correspondante,
- pour chaque plan j>1 :

  * détermination d'une matrice complexe propagée $B'_j$, à partir de la matrice mesurée d'intensité $I_{j-1}$ du plan j-1 et de la matrice de phase $\varphi$ du plan j-1,
  * extraction, de $B'_j$, de la matrice de phase du plan j,

- itération du procédé jusqu'à convergence (et j=1 lorsque j-1=N).

Le procédé selon l'invention met donc en oeuvre N plans, avec N≥3. L'un de ces plans est celui dont on veut déterminer la répartition d'intensité et de phase. Le procédé débute avec un profil de phase (nul, par exemple) sur un premier plan. On effectue ensuite, par calcul, des propagations de faisceau d'un plan à un autre en conservant, à l'issue de chaque itération, le profil de phase calculé pour un plan, et en introduisant le profil d'intensité mesuré dans le même plan de coupe. On passe ainsi du plan n° 1 au plan n° 2, ... au plan n° N, puis on revient dans le plan n° 1. On constate la convergence du profil de phase vers le profil recherché : en effet, les profils d'intensité et de phase calculés dans l'un des N plans permettent de retrouver fidèlement les profils d'intensité mesurés dans n'importe quel autre plan.

Pour chaque plan j(j>1), on calcule un profil de phase à partir de la matrice complexe traduisant l'état du faisceau dans ce plan. Cette matrice complexe résulte elle-même d'un calcul, qui traduit les équations de propagation, mettant en oeuvre la matrice (mesuré) d'intensité et la matrice (calculée) de phase dans le plan j-1. Autrement dit, pour chaque plan j, on calcule, par propagation, le profil d'intensité et de phase dans ce plan, puis on remplace le profil d'intensité calculé de ce plan par le profil d'intensité mesuré. On peut alors, à partir de ce profil d'intensité mesuré et du profil de phase calculé, effectuer un calcul de propagation pour le plan j+1.

On peut utiliser un cheminement quelconque entre les N plans; selon le besoin.

Par conséquent, selon l'invention, au lieu d'évoluer entre deux plans de coupe en aller et retour, on met en oeuvre au moins trois plans de coupe, et on passe, par exemple, du premier plan au second, puis au troisième, .... puis au Nième, et on revient au premier plan, et ainsi de suite. La précision de la reconstruction de phase sur les plans intermédiaires est ainsi notablement améliorée, ce qui permet de concurrencer des systèmes commerciaux coûteux par exemple de type Hartmann-Shack ou Zygo.

Selon un perfectionnement, la phase prise en compte dans le premier plan de coupe à chaque itération est une moyenne entre les profils de phase déterminés à partir de tous les couples de plans par un aller-retour. Cette méthode permet d'introduire un coefficient de pondération dans le calcul de la moyenne, ce coefficient pouvant dépendre d'une fonction de mérite du calcul en cours. On optimise ainsi la convergence sur les N profils.

Deux versions du procédé selon l'invention sont donc proposées selon le cheminement du calcul entre les plans de mesure. La première méthode parcourt les plans de manière séquentielle, alors que la seconde effectue des aller-retour entre des couples de plans, et permet de pondérer le poids relatif des différents plans mesurés.

L'invention concerne également un dispositif de mise en oeuvre de l'invention.

Ainsi, l'invention concerne un dispositif, pour déterminer l'intensité et la phase d'un faisceau lumineux dans un plan comportant :

- des moyens pour mesurer l'intensité $I_i$ (i=1,...N) du faisceau dans N plans, N≥3,
- des moyens de calcul programmés pour, à partir d'une matrice de phase $\varphi_1$ de départ correspondant à un plan i=1 :

  * calculer une matrice d'amplitude complexe ($B_1$) par produit de la matrice de phase $e^{i\varphi_1}$ avec la matrice d'amplitude ($A_1$) correspondante,
  * pour chaque plan j>1 :

    · calculer une matrice complexe propagée

$B'_j$ à partir de la matrice mesurée d'amplitude $A_{j-1}$ du plan j-1 et de la matrice de phase $\varphi$ du plan j-1,

  · extraire une matrice de phase du plan j de la matrice $B'_j$,
  · itérer le calcul ci-dessus en faisant j=1 lorsque j-1=N.

Ce dispositif utilise autant de caméras que de plans de coupe ; de préférence les images mesurées sont numérisées avant traitement. Il peut comporter un système de mise en forme du faisceau, dont il limite l'étendue pour l'adaptation aux caméras et à la longueur du banc ; une étape d'étalonnage est alors incorporée dans les étapes du procédé principal. L'adjonction d'une lentille ou de tout autre objet de phase, permettant d'adapter le faisceau au dispositif de mesure (maîtrise de la divergence...) permet d'augmenter le champ d'application du dispositif. L'étape d'étalonnage permet ensuite de s'affranchir, par calcul, de la présence du composant ajouté, et d'accéder ainsi aux caractéristiques du faisceau.

Un analyseur de phase utilisant un procédé selon l'invention permet d'obtenir la répartition de l'amplitude complexe du champ, représentant à la fois l'intensité et la phase du faisceau dans un plan donné (en général un plan image). Cette mesure permet alors de calculer, directement et de façon fiable, l'évolution du faisceau dans d'autres plans.

Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- La figure 1 représente un dispositif pour la mise en oeuvre de l'invention.
- La figure 2 représente des étapes d'un traitement préalable de matrices d'intensité.
- La figure 3 représente les étapes d'un premier mode de réalisation d'un procédé selon l'invention.
- La figure 4 représente les étapes d'un deuxième mode de réalisation d'un procédé selon l'invention.
- La figure 5 représente schématiquement un traitement dit "de propagation".

Description détaillée de modes de réalisation de l'invention

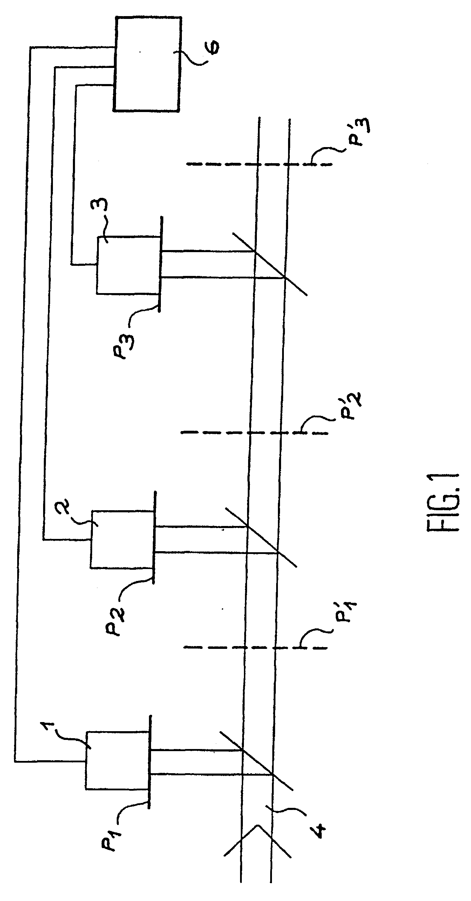

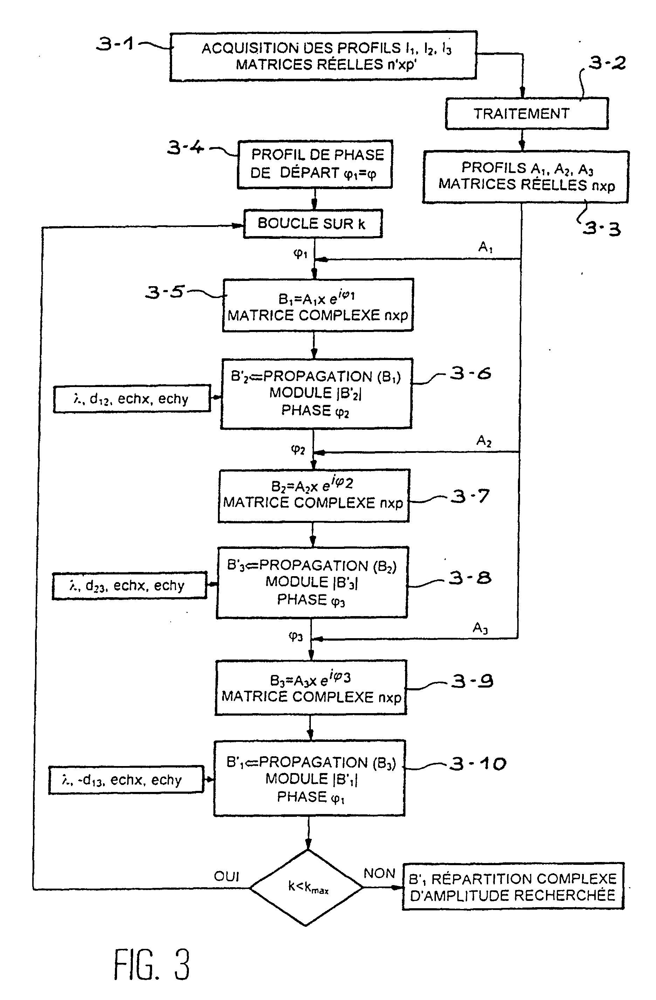

L'invention va d'abord être décrite à l'aide du mode de réalisation schématisé sur la figure 3. Un dispositif de mise en oeuvre est représenté schématiquement sur la figure 1.

L'invention permet de calculer le champ complexe d'un faisceau laser 4 dans la pupille de départ définie par convention par le plan $P'_1$ représenté en figure 1 à partir de mesures d'intensité effectuées dans N plans $P_1$, $P_2$, $P_3$ (N≥3) ($P_i$ et $P'_i$ étant optiquement conjugués).

On décrit ici le cas où N=3.

Soit, $A_i e^{i\varphi_1}$ l'amplitude complexe dans le plan i, 1≤i≤N

On mesure $I_i=|A_i|^2$ intensité dans le plan i, à l'aide de caméras CCD 1, 2, 3.

Les caméras sont reliées à un calculateur 6. Le procédé et la méthode de calcul sont implémentés par programmation de ce calculateur. Les instructions appropriées de programmation sont mémorisées sur des disques magnétiques ou dans des mémoires conventionnelles RAM ou ROM.

Pour chacun des plans de mesure $P_i$, la mesure $I_i$ est fournie à une mémoire de calculateur 6.

Sont également mémorisées :

- la valeur de la longueur d'onde du faisceau analysé, notée $\lambda$,
- les échelles des mesures exprimées en m/pixel (distance entre deux points successifs de chaque matrice, après interpolation) notées echx et echy,
- les distances relatives entre les N plans de mesure : $d(P_i,P_j)=d_{i,j}$.

A partir des mesures d'intensité $I_i$, la méthode selon l'invention permet de retrouver la phase $\varphi_1$ dans le plan numéro 1. On pourra alors calculer la phase $\varphi$ du faisceau dans n'importe quel plan.

La mesure de $I_i$ fournie par chaque caméra se présente, après numérisation, sous la forme d'une matrice $I_i(n',p')$, comportant n' lignes et p' colonnes de nombres réels.

Chaque matrice est rééchantillonnée en nxp où n et p sont des puissances de 2, proches de n' et p', pour pouvoir utiliser des transformées de Fourier rapides.

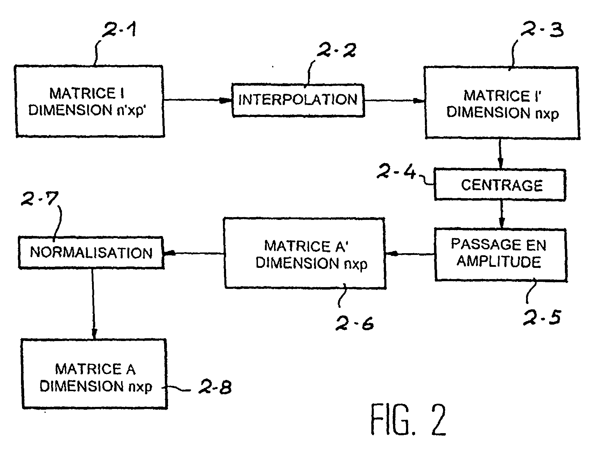

Un traitement est préalablement effectué sur les matrices, pour s'affranchir de certains problèmes liés à la mesure : ce traitement est représenté schématiquement sur la figure 2.

Une étape d'interpolation (étape 2-2) permet de passer d'un profil à n'xp' points au profil ayant nxp points, avec n et p puissances de 2 les plus proches de n' et p'. On définit donc n et p puis on interpole les données pour obtenir la matrice I', correspondant à I (étape 2-3).

On centre le profil dans la fenêtre de manière à avoir le centre de gravité de la répartition d'intensité ainsi considérée au centre de la matrice (étape 2-4).

On va utiliser, pour les calculs, l'amplitude dans les plans de mesure. On prend donc la racine, terme à terme, de la matrice en intensité (étape 2-5) pour obtenir enfin A' (étape 2-6).

On effectue ensuite une normalisation des profils pour s'assurer de la conservation de l'énergie. On divise pour cela la matrice A' par la racine de la somme des carrés de ses termes (étape 2-7) pour obtenir l'amplitude recherchée A (étape 2-8).

La figure 3 donne ensuite les étapes principales du calcul selon l'invention, dans le cas de trois plans de mesure.

On réalise l'acquisition des trois intensités $I_1$, $I_2$, $I_3$ (étape 3-1). On traite ensuite ces trois images numérisées comme décrit ci-dessus en liaison avec la figure 2 (étape 3-2). On obtient les amplitudes $A_1$, $A_2$ et $A_3$ de dimensions nxp (étape 3-3).

On choisit (étape 3-4) une matrice de phase de départ $e^{i\varphi_1}$ de dimensions nxp (avec par exemple $\varphi_1=0$), que l'on multiplie avec $A_1$ (étape 3-5) pour obtenir la matrice $B_1$ complexe nxp :

$$B_1=A_1 e^{i\varphi_1}$$

On donne plus loin plus de détails sur cette multiplication.

On applique ensuite à cette matrice $B_1$ un traitement dit "de propagation" (étape 3-6), qui sera décrit plus loin, et qui permet d'obtenir une matrice $B'_2$ à partir de la matrice $B_1$, la distance de propagation étant la distance $d_{12}$ entre les plans i=1 et i=2.

On récupère l'information $\varphi_2$ de phase contenue dans $B'_2$ (comme décrit ci-dessous). Cette information est multipliée par l'amplitude $A_2$ (étape 3-7). On obtient alors la matrice $B_2$ à laquelle on applique la propagation sur une distance $d_{23}$ (distance entre les plans i=2 et i=3). On obtient la matrice $B'_3$ (étape 3-8).

De même, on extrait $\varphi_3$ de $B'_3$ et on calcule $B_3$, produit de $\varphi_3$ et de $A_3$ (étape 3-5). En appliquant la fonction de propagation à $B_3$ sur une distance $-d_{13}$ (pour revenir au plan 1), on trouve le profil reconstruit $B'_1$ (étape 3-10), contenant un nouveau terme $\varphi_1$, qui sert à la boucle suivante (avec k=k+1).

On peut aussi propager $B_3$ vers un quatrième plan si on a choisi un nombre de plans supérieur à 3.

Le procédé s'arrête, par exemple lorsque k atteint une valeur limite $k_{max}$, ou lorsque le résultat est jugé satisfaisant. La valeur de $B_1$ calculée correspond alors au profil d'amplitude complexe dans le premier plan (i=1).

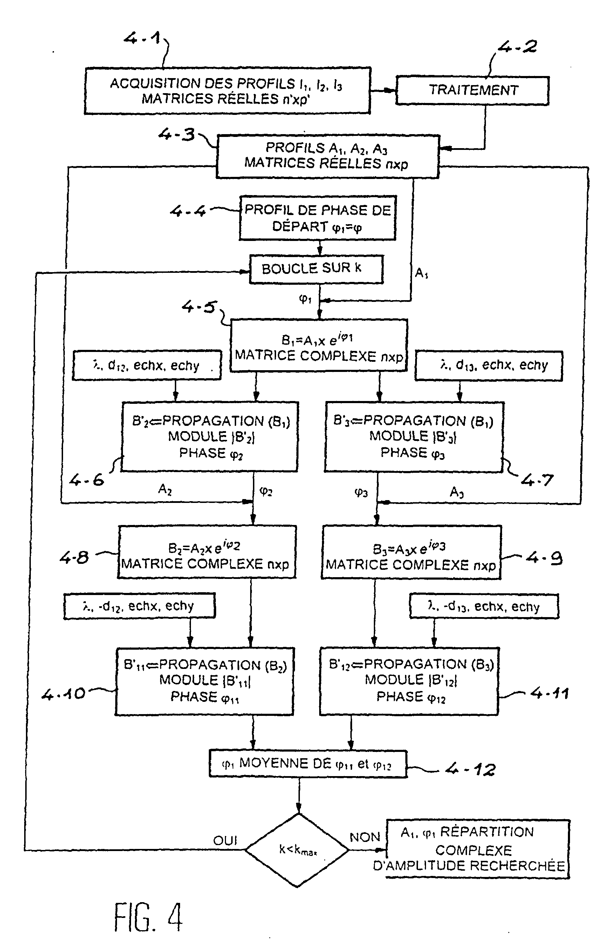

Une version améliorée de ce procédé, dite version "pondérée", est représentée schématiquement sur la figure 4.

On réalise l'acquisition des trois intensités $I_1$, $I_2$, $I_3$ (étape 4-1). On traite ensuite ces trois images numérisées comme décrit ci-dessus (étape 4-2). On obtient donc les matrices réelles d'amplitude $A_1$, $A_2$, $A_3$, de dimensions nxp (étape 4-3).

On choisit une matrice de phase de départ $e^{i\varphi_1}$ de dimensions nxp (étape 4-4, avec par exemple $\varphi_1=0$).

On multiplie $e^{i\varphi_1}$ avec $A_1$ pour obtenir la matrice complexe $B_1$ (étape 4-5) :

$$B_1 = A_1 e^{i\varphi_1}$$

Là encore, plus de détails sur cette multiplication seront donnés plus loin.

On applique à cette matrice la fonction de propagation, associée aux distances $d_{12}$ et $d_{13}$ pour obtenir les matrices $B'_2$ et $B'_3$ (étapes 4-6 et 4-7).

Ces dernières contiennent les informations de phase $\varphi_2$ dans le plan i=2, et $\varphi_3$ dans le plan i=3. On multiplie $\varphi_2$ et $A_2$ pour obtenir $B_2$ (étape 4-8), $\varphi_3$ et $A_3$ pour obtenir $B_3$ (étape 4-9). On applique ensuite à chacune des matrices $B_2$ et $B_3$ le traitement de propagation, respectivement avec une distance $-d_{12}$ et $-d_{13}$ (étapes 4-10 et 4-11).

Des deux matrices $B'_{11}$ et $B'_{12}$ ainsi obtenues, on extrait les deux phases $\varphi_{11}$ et $\varphi_{12}$. On obtient (étape 4-12) un nouveau terme $\varphi_1$ en effectuant une moyenne pondérée de ces deux phases (le type de pondération est défini selon les besoins). Ce terme sert à la boucle suivante avec k=k+1.

On peut également travailler avec un plus grand nombre N de plans (N>3), la moyenne pondérée au début de la boucle k+1 se faisant alors sur les N-1 phases déterminées lors de la boucle k. On peut faire aussi une moyenne sur N-p phases, avec p>1, mais cela revient à ignorer p-1 plans, ou à pondérer p-1 plan par 0 : tout se passe alors comme si les mesures étaient faites sur N-(p-1) plans.

On s'arrête lorsque k atteint une valeur limite $k_{max}$ ou lorsque le résultat est jugé satisfaisant. La phase $\varphi_1$ ainsi trouvée, combinée avec l'amplitude $A_1$, donne l'amplitude complexe dans le premier plan.

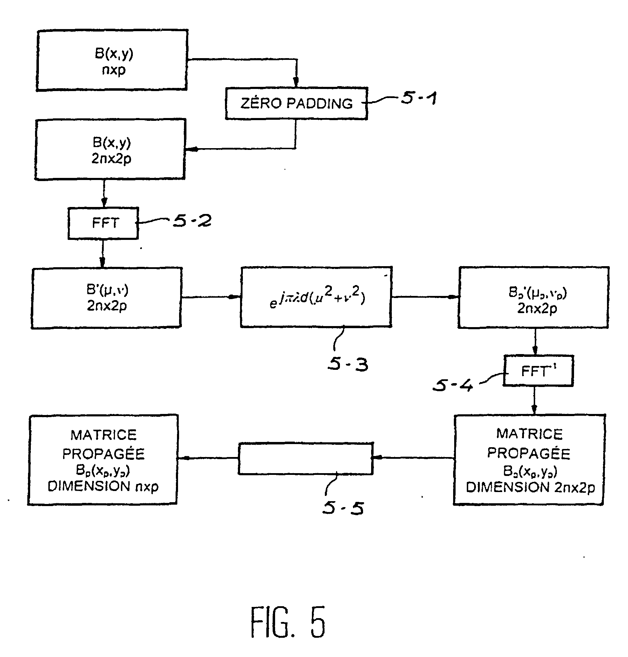

Le traitement de propagation, correspondant aux étapes 3-6, 3-8, 3-10 et 4-6, 4-7, 4-10 et 4-11 des figures 3 et 4, est illustré sur la figure 5. A partir d'une matrice B(x,y) de départ, de dimensions nxp, on calcule une "matrice propagée" $B_p$ $(x_p, y_p)$, également de dimensions nxp.

La matrice complexe B décrit l'amplitude et la phase du faisceau dans un certain plan. La matrice complexe $B_p$ décrit l'amplitude et la phase du faisceau dans un autre plan. On peut passer de B à $B_p$, c'est-à-dire d'un plan à un autre, à l'aide des équations de propagation du faisceau.

On peut par exemple passer de B(x,y) à $B_p(x_p, y_p)$ par convolution de B par la matrice de propagation dans le vide de l'optique de Fourier.

Une première étape 5-1, dite de "zero padding", consiste à centrer la matrice B de dimension nxp dans une matrice 2nx2p, composée uniquement de zéros, afin de faire une convolution linéaire.

On obtient donc une matrice B(x,y) de taille 2nx2p.

Par une transformation de Fourier rapide (étape 5-2), on obtient une matrice $B'(\mu,\nu)$, de dimensions 2nx2p. Une multiplication par un facteur

$$e^{j\pi\lambda d\left(\mu^2, \nu^2\right)}$$

(étape 5-3) permet obtenir une matrice $B'_p(\mu_p, \nu_p)$ de dimensions 2nx2p. Par transformée de Fourier inverse (étape 5-4), on obtient une matrice propagée $B_p(x_p, y_p)$ de dimensions 2nx2p.

L'extraction (étape 5-5) est l'étape inverse qui consiste à retirer les termes (le plus souvent nuls) périphériques de la matrice $B_p$ pour revenir à la dimension de départ.

La FFT est l'algorithme de transformée de Fourier rapide qui existe dans la plupart des bibliothèques de fonctions.

Tout autre algorithme de propagation pourrait être utilisé avec succès.

En ce qui concerne le traitement des phases et les multiplications, on notera d'abord que l'ensemble des calculs de propagation s'effectue avec des matrices d'amplitudes complexes regroupant amplitude et phase.

C'est l'information de phase qui est conservée à chaque étape alors qu'on reprend les profils d'amplitude acquis.

Lorsqu'on manipule une matrice B d'amplitude complexe ($B=|B|.e^{i\varphi}$), on cherche à extraire la phase $\varphi$. Il existe deux possibilités de gestion de la phase :

- selon une première possibilité, le calcul de la phase $\varphi$ peut se faire en calculant l'argument de l'amplitude complexe. Lors de la multiplication de la phase par un profil enregistré $A_i$, on multiplie terme à terme la matrice $A_i$ avec la matrice des $e^{i\varphi}$. On obtient alors la nouvelle amplitude complexe B ;

- selon une deuxième possibilité pour alléger la charge de calcul, on peut ne calculer la phase $\varphi$ d'une matrice B que lorsque l'on veut son expression en fin de reconstruction. Pour les calculs intermédiaires, on travaille directement avec la matrice $e^{i\varphi}$. L'obtention de ce terme se fait directement en divisant terme à terme la matrice complexe B par sa matrice module $|B|$. Lorsque l'on veut ensuite multiplier l'amplitude enregistrée par la phase on multiplie terme à terme la matrice A par la matrice $e^{i\varphi}$ ainsi calculée.

La méthode selon l'invention, grâce à un nombre de plans de référence supérieur ou égal à 3, permet en quelque sorte de "forcer" le profil calculé en chacun des plans de mesure. Il en résulte un profil intensité/ phase de départ beaucoup plus stable et plus proche de la réalité mesurée. Un excellent accord a pu être constaté entre les profils mesurés et les profils calculés à partir du plan origine. Ceci prouve la véracité du profil de phase reconstitué. Cet accord est nettement meilleur que ce que l'on peut espérer obtenir avec un analyseur de type Hartmann-Shack ou Zygo, et ceci pour un coût moindre.

**Revendications**

1. Procédé itératif de détermination de la répartition d'intensité et de phase d'un faisceau lumineux cohérent (4), dans un plan, comportant :

   - la mesure de l'intensité $I_i$, i=1... N, du faisceau, dans N plans, N≥3, dont le plan dans lequel on veut déterminer la répartition d'intensité et de phase,
   - le choix, pour le plan i=1, d'une matrice de phase $\varphi_1$ de départ et le calcul d'une matrice d'amplitude complexe, par produit terme à terme de la matrice de phase $e^{i\varphi_1}$ avec la matrice d'amplitude $A_1$ correspondante,
   - pour chaque plan j>1 :

     * détermination d'une matrice complexe propagée $B'_j$ à partir de la matrice mesurée d'amplitude $A_{j-1}$ du plan j-1 et de la matrice de phase $\varphi$ du plan j-1,
     * extraction, de $B'_j$, d'une matrice de phase du plan j,

   - itération du procédé jusqu'à convergence, avec j=1 lorsque j-1=N.

2. Procédé selon la revendication 1, chaque matrice $A_i$ d'intensité comportant n lignes et p colonnes, n et p étant des puissances de 2.

3. Procédé selon la revendication 1 ou 2, la phase prise en compte dans le plan j=1 à chaque itération étant une moyenne pondérée entre les N-1 profils de phase déterminés antérieurement.

4. Procédé selon l'une des revendications 1 à 3, la matrice complexe propagée B'j étant obtenue :

   - par calcul du produit de la matrice mesurée d'amplitude $A_{j-1}$ du plan j-1 et de la matrice de phase $e^{i\varphi}$ du plan j-1,
   - par convolution de ce produit par la matrice de propagation dans le vide de l'optique de Fourier.

5. Procédé selon l'une des revendications 1 à 4, la matrice de phase $\varphi$ du plan j-1 étant obtenue par calcul de l'argument de la matrice complexe propagée $B'_{j-1}$ associée au plan j-1.

6. Procédé selon l'une des revendications 1 à 4, la matrice de phase $\varphi$ du plan j-1 étant obtenue par division, terme à terme, de la matrice complexe propagée $B'_{j-1}$ par sa matrice module $|B'_{j-1}|$.

7. Procédé selon l'une des revendications 1 à 6, le faisceau étant préalablement mis en forme par des moyens qui en limitent son étendue, et le procédé comportant en outre une étape d'étalonnage.

8. Dispositif pour déterminer l'intensité et la phase d'un faisceau lumineux (4) dans un plan comportant :

   - des moyens (1, 2, 3) pour mesurer l'intensité $A_i$ (i=1,...N) du faisceau dans N plans, N≥3,
   - des moyens de calcul (6) programmés pour, à partir d'une matrice de phase $\varphi_1$ de départ, correspondant à un plan i=1 :

     * calculer une matrice d'amplitude complexe ($B_1$) par produit de la matrice de phase $e^{i\varphi_1}$ avec la matrice d'intensité ($A_1$) correspondante,
     * pour chaque plan j>1 :

       . calculer une matrice complexe propagée $B'_j$ à partir de la matrice mesurée d'amplitude $A_{j-1}$ du plan j-1 et de la matrice de phase $\varphi$ du plan j-1,
       . extraire une matrice de phase du plan j de la matrice $B'_j$

     * itérer le calcul ci-dessus, en faisant j=1 lorsque j-1=N.

9. Dispositif selon la revendication 8, les moyens (6) de calcul étant en outre programmés pour transformer la matrice d'intensité mesurée en matrice à n lignes et p colonnes, n et p étant des puissances de 2.

10. Dispositif selon l'une des revendications 8 ou 9, les moyens (6) de calcul étant en outre programmés pour produire à la fin de chaque itération, une moyenne pondérée des N-1 profils de phases déterminés au cours de cette itération.

11. Dispositif selon l'une des revendications 8 à 10, les moyens (6) de calcul étant programmés pour calculer une matrice complexe propagée B'j :

    - par produit de la matrice mesurée d'intensité $A_{j-1}$ du plan j-1 et de la matrice de phase $e^{i\varphi}$ du plan j-1,
    - puis par convolution de ce produit par la matrice de propagation dans le vide de l'optique de Fourier.

12. Dispositif selon l'une des revendications 8 à 11, les moyens (6) de calcul étant programmés pour fournir la matrice de phase $\varphi$ du plan j-1 par calcul de l'argument de la matrice complexe $B'_{j-1}$ associée au

plan j-1.

13. Dispositif selon l'une des revendications 8 à 11, les moyens (6) de calcul étant programmés pour fournir la matrice de phase φ du plan j-1 par division, terme à terme, de la matrice complexe propagée B'$_{j-1}$ par sa matrice module |B'$_{j-1}$|.

14. Dispositif selon l'une des revendications 8 à 12, comportant en outre des moyens pour mettre en forme le faisceau et en limiter l'étendue afin de l'adapter aux caméras, les moyens (6) de calcul étant en outre programmés pour que le calcul soit affranchi de la présence desdits moyens de mise en forme du faisceau.

**Patentansprüche**

1. Iterationsverfahren zur Bestimmung der Verteilung der Intensität und der Phase eines kohärenten Lichtstrahls (4) in einer Ebene, umfassend:

   - die Messung der Intensität I$_i$, i = 1...N des Strahls in N-Ebenen, N≥3, unter denen sich die Ebene befindet, in der die Verteilung der Intensität und der Phase bestimmt werden soll,
   - Auswahl für die Ebene i = 1 einer Ausgangsmatrix der Phase φ$_1$ und Berechnung einer komplexen Matrix der Amplitude durch das Produkt, Term für Term, der Matrix der Phase e$^{iφ1}$ mit der entsprechenden Matrix der Amplitude A$_1$,
   - für jede Ebene j > 1:

     * Bestimmung einer Matrix der Ausbreitung B'$_j$ auf der Basis der gemessenen Matrix der Amplitude A$_{j-1}$ der Ebene j-1 und der Matrix der Phase φ der Ebene j-1,
     * Extrahieren aus B'$_j$ einer Matrix der Phase der Ebene j,

   - Iteration des Verfahrens bis zur Konvergenz, wobei j=1 ist, wenn j-1=N ist.

2. Verfahren nach Anspruch 1, wobei jede Matrix der Intensität A$_i$ n Zeilen und p Spalten umfaßt, wobei n und p Potenzen von 2 sind.

3. Verfahren nach Anspruch 1 oder 2, wobei die in der Ebene j=1 bei jeder Iteration zum Berechnen verwendete Phase ein gewichtetes Mittel zwischen den N-1 vorher bestimmten Phasenprofilen ist.

4. Verfahren nach einem der Ansprüche 1 bis 3, wobei die Matrix der Ausbreitung B'j wie folgt erhalten wird:

   - durch Berechnen des Produkts der gemessenen Matrix der Amplitude A$_{j-1}$ der Ebene j-1 und der Matrix der Phase e$^{iφ}$ der Ebene j-1,
   - durch Konvolution (Faltung) dieses Produkts durch die Matrix der Ausbreitung im Vakuum der Fourier-Optik.

5. Verfahren nach einem der Ansprüche 1 bis 4, wobei die Matrix der Phase φ der Ebene j-1 durch Berechnen des Arguments der der Ebene j-1 zugeordneten Matrix der Ausbreitung B'$_{j-1}$ erhalten wird.

6. Verfahren nach einem der Ansprüche 1 bis 4, wobei die Matrix der Phase φ der Ebene j-1 durch Division, Term für Term, der Matrix der Ausbreitung B'$_{j-1}$ durch ihr Matrixmaß (matrice module) |B'$_{j-1}$| erhalten wird.

7. Verfahren nach einem der Ansprüche 1 bis 6, wobei der Lichtstrahl vorher durch Mittel umgeformt wird, die seine Ausbreitung begrenzen, und das Verfahren außerdem einen Eichschritt aufweist.

8. Vorrichtung zur Bestimmung der Intensität und der Phase eines Lichtstrahls (4) in einer Ebene, mit:

   - Mitteln (1,2,3) zum Messen der Intensität A$_i$ (i = 1,...N) des Strahls in N-Ebenen, N≥3,
   - programmierten Berechnungsmitteln (6) zum, ausgehend von einer Ausgangsmatrix der Phase φ$_1$, die einer Ebene i = 1 entspricht:

     * Berechnen einer komplexen Matrix der Amplitude (B$_1$) über das Produkt der Matrix der Phase e$^{iφ1}$ mit der entsprechenden Matrix der Intensität (A$_1$),
     * für jede Ebene j>1:

       . Berechnen einer Matrix der Ausbreitung B'j, auf der Basis der gemessenen Matrix der Amplitude A$_{j-1}$ der Ebene j-1 und der Matrix der Phase φ der Ebene j-1,
       . Extrahieren einer Matrix der Phase aus der Ebene j der Matrix B'$_j$,

     * Iteration der obigen Berechnung, indem j=1 gemacht wird, wenn j-1=N ist.

9. Vorrichtung nach Anspruch 8, wobei die Mittel (6) zur Berechnung außerdem so programmiert sind, daß sie die gemessene Matrix der Intensität in eine Matrix mit n Zeilen und p Spalten umformt, wobei n und p Potenzen von 2 sind.

10. Vorrichtung nach einem der Ansprüche 8 oder 9, wobei die Mittel (6) zur Berechnung außerdem so programmiert sind, daß sie am Ende jeder Iteration ein gewichtetes Mittel der N-1 Profile von Phasen, die im Lauf dieser Iteration bestimmt wurden, erzeugen.

11. Vorrichtung nach einem der Ansprüche 8 bis 10, wobei die Mittel (6) zur Berechnung so programmiert sind, daß sie eine Matrix der Ausbreitung B'j berechnen:

- durch das Produkt der gemessenen Matrix der Intensität $A_{j-1}$ der Ebene j-1 und der Matrix der Phase $e^{i\varphi}$ der Ebene j-1,
- anschließend durch Konvolution dieses Produkts durch die Matrix der Ausbreitung im Vakuum der Fourier-Optik.

12. Vorrichtung nach einem der Ansprüche 8 bis 11, wobei die Mittel (6) zur Berechnung so programmiert sind, daß sie die Matrix der Phase $\varphi$ der Ebene j-1 durch Berechnung des Arguments der der Ebene j-1 zugeordneten komplexen Matrix $B'_{j-1}$ liefern.

13. Vorrichtung nach einem der Ansprüche 8 bis 11, wobei die Mittel (6) zur Berechnung so programmiert sind, daß sie die Matrix der Phase $\varphi$ der Ebene j-1 durch Teilung, Term für Term, der Matrix der Ausbreitung $B'_{j-1}$ durch sein Matrixmaß $|B'_{j-1}|$ liefern.

14. Vorrichtung nach einem der Ansprüche 8 bis 12, ferner mit Mitteln zur Formgebung des Lichtstrahls und zur Begrenzung seiner Ausbreitung, um ihn an Kameras anzupassen, wobei die Mittel (6) zur Berechnung außerdem so programmiert sind, daß die Berechnung ohne die Präsenz der Formgebungsmittel des Lichtstrahls stattfindet.

**Claims**

1. An iterative method of determining the intensity and phase distribution of a coherent light beam (4), in a plane, comprising the steps of:

- measuring the intensity $I_i$, i=1 ... N, of the beam, in N planes, N≥3, including the plane wherein intensity and phase distribution is to be determined,
- choosing, for plane i=1, an initial phase matrix $\varphi_1$ and calculating a complex amplitude matrix, by term-wise multiplying the phase matrix $e^{i\varphi 1}$ by the corresponding amplitude matrix $A_1$,
- for each plane j>1:

    • determining a propagated complex matrix $B'_j$ from the measured amplitude matrix $A_{j-1}$ of plane j-1 and the phase matrix $\varphi$ of plane j-1,
    • extracting, from $B'_j$, a phase matrix of plane j,

- iterating the method up to convergence, with j-1 when j-1=N.

2. The method according to claim 1, each intensity matrix $A_i$ including n lines and p columns, n and p being powers of 2.

3. The method according to claim 1 or 2, the phase taken into account in plane j=1 at each iteration being a weighted average among the N-1 phase profiles determined earlier.

4. The method according to any of claims 1 to 3, the propagated complex matrix $B'_j$ being obtained by:

- calculating the product of the measured matrix with amplitude $A_{j-1}$ of plane j-1 and the phase matrix $e^{i\varphi}$ of plane j-1,
- convoluting this product with the propagation matrix in the vacuum of the Fourier optics.

5. The method according to any of claims 1 to 4, the phase matrix $\varphi$ of plane j-1 being obtained by calculating the argument of the propagated complex matrix $B'_{j-1}$ associated with plane j-1.

6. The method according to any of claims 1 to 4, the phase matrix $\varphi$ of plane j-1 being obtained by term-wise dividing the propagated complex matrix $B'_{j-1}$ by its module matrix $|B'_{j-1}|$.

7. The method according to any of claims 1 to 6, the beam being previously shaped by means limiting the extend thereof, and the method further comprising a calibration step.

8. A device for determining the intensity and phase of a light beam (4) in a plane comprising:

- a means (1, 2, 3) for measuring the intensity $A_i$ (i=1, ... N) of the beam in N planes, N≥3,
- a calculation means (6) programmed to perform the following steps, from an initial phase matrix $\varphi_1$, corresponding to a plane i=1:

    • calculating a complex amplitude matrix $(B_1)$ by multiplying the phase matrix $e^{i\varphi 1}$ by the corresponding intensity matrix $(A_1)$,
    • for each plane j>1:

        . calculating a propagated complex matrix $B'_j$ from the measured amplitude matrix $A_{j-1}$ of plane j-1 and the phase matrix $\varphi$ of plane j-1,
        . extracting a phase matrix of plane j , from matrix $B'_j$.

- iterating the above calculation, making j=1 when j-1=N.

9. The device according to claim 8, the calculation means (6) being further programmed for converting the intensity matrix measured into a matrix of n lines and p columns, n and p being powers of 2.

10. The device according to any of claims 8 or 9, the calculation means (6) being further programmed for producing, at the end of each iteration, a weighted average of the N-1 phase profiles determined during this iteration.

11. The device according to any of claims 8 to 10, the calculation means (6) being programmed for calculating a propagated complex matrix $B'_j$:

- by multiplying the measured matrix by intensity $A_{j-1}$ of plane j-1 and the phase matrix $e^{i\varphi}$ of plane j-1,
- then convoluting this product with the propagation matrix in the vacuum of the Fourier optics.

12. The device according to any of claims 8 to 11, the calculation means (6) being programmed for producing the phase matrix $\varphi$ of plane j-1 by calculating the argument of the complex matrix $B'_{j-1}$ associated with plane j-1.

13. The device according to any of claims 8 to 11, the calculation means (6) being programmed for producing the phase matrix $\varphi$ of plane j-1 by term-wise dividing the propagated complex matrix $B'_{j-1}$ by its module matrix $|B'_{j-1}|$.

14. The device according to any of claims 8 to 12, further comprising means for shaping the beam and limiting the extent thereof so as to adapt it to the cameras, the calculation means (6) being further programmed for the calculation to be independent of the presence of said beam shaping means.

FIG.1

**2·1**

**2·2**

**2·3**

| MATRICE I DIMENSION n'xp' | → | INTERPOLATION | → | MATRICE I' DIMENSION nxp |

**2·4** → CENTRAGE

**2·7**

**2·5**

**2·6**

| NORMALISATION | ← | MATRICE A' DIMENSION nxp | ← | PASSAGE EN AMPLITUDE |

↓

| MATRICE A DIMENSION nxp | **2·8**

FIG. 2

3-1 — ACQUISITION DES PROFILS $I_1$, $I_2$, $I_3$
MATRICES RÉELLES n'xp'

3-2

TRAITEMENT

3-4 — PROFIL DE PHASE
DE DÉPART $\varphi_1 = \varphi$

PROFILS $A_1$, $A_2$, $A_3$
MATRICES RÉELLES nxp

3-3

BOUCLE SUR k

$\varphi_1$ ←———————— $A_1$

3-5 — $B_1 = A_1 \times e^{i\varphi_1}$
MATRICE COMPLEXE nxp

$\lambda$, $d_{12}$, echx, echy → $B'_2 \Leftarrow$ PROPAGATION $(B_1)$ — 3-6
MODULE $|B'_2|$
PHASE $\varphi_2$

$\varphi_2$ ←———————— $A_2$

$B_2 = A_2 \times e^{i\varphi_2}$ — 3-7
MATRICE COMPLEXE nxp

$\lambda$, $d_{23}$, echx, echy → $B'_3 \Leftarrow$ PROPAGATION $(B_2)$ — 3-8
MODULE $|B'_3|$
PHASE $\varphi_3$

$\varphi_3$ ←———————— $A_3$

$B_3 = A_3 \times e^{i\varphi_3}$ — 3-9
MATRICE COMPLEXE nxp

$\lambda$, $-d_{13}$, echx, echy → $B'_1 \Leftarrow$ PROPAGATION $(B_3)$ — 3-10
MODULE $|B'_1|$
PHASE $\varphi_1$

OUI ← $k < k_{max}$ → NON → $B'_1$ RÉPARTITION COMPLEXE
D'AMPLITUDE RECHERCHÉE

FIG. 3

*4-1*

ACQUISITION DES PROFILS $I_1$, $I_2$, $I_3$
MATRICES RÉELLES n'xp'

*4-2*

TRAITEMENT

*4-3*

PROFILS $A_1$, $A_2$, $A_3$
MATRICES RÉELLES nxp

*4-4*

PROFIL DE PHASE DE
DÉPART $\varphi_1 = \varphi$

BOUCLE SUR k

$A_1$

$\varphi_1$

*4-5*

$B_1 = A_1 \times e^{i\varphi_1}$
MATRICE COMPLEXE nxp

$\lambda$, $d_{12}$, echx, echy

$\lambda$, $d_{13}$, echx, echy

$B'_2 = $PROPAGATION ($B_1$)
MODULE $|B'_2|$
PHASE $\varphi_2$

*4-6*

$B'_3 = $PROPAGATION ($B_1$)
MODULE $|B'_3|$
PHASE $\varphi_3$

*4-7*

$A_2$    $\varphi_2$

$\varphi_3$    $A_3$

*4-8*

$B_2 = A_2 \times e^{i\varphi_2}$
MATRICE COMPLEXE nxp

$B_3 = A_3 \times e^{i\varphi_3}$
MATRICE COMPLEXE nxp

*4-9*

$\lambda$, $-d_{12}$, echx, echy

$\lambda$, $-d_{13}$, echx, echy

$B'_{11} = $PROPAGATION ($B_2$)
MODULE $|B'_{11}|$
PHASE $\varphi_{11}$

*4-10*

$B'_{12} = $PROPAGATION ($B_3$)
MODULE $|B'_{12}|$
PHASE $\varphi_{12}$

*4-11*

$\varphi_1$ MOYENNE DE $\varphi_{11}$ et $\varphi_{12}$

*4-12*

OUI    $k < k_{max}$    NON

$A_1$, $\varphi_1$ RÉPARTITION
COMPLEXE
D'AMPLITUDE RECHERCHÉE

FIG. 4

B(x,y)
nxp

ZÉRO PADDING — 5-1

B(x,y)
2nx2p

FFT — 5-2

B'($\mu$,$\nu$)
2nx2p

$e^{j\pi\lambda d(u^2+v^2)}$

5-3

$B_p$'($\mu_p$,$\nu_p$)
2nx2p

5-4 — FFT$^{-1}$

MATRICE
PROPAGÉE
$B_p(x_p,y_p)$
DIMENSION nxp

5-5

MATRICE
PROPAGÉE
$B_p(x_p,y_p)$
DIMENSION 2nx2p

FIG. 5